# EUROPÄISCHE PATENTANMELDUNG

(11) **EP 1 970 870 A1**
(43) Veröffentlichungstag der Anmeldung: **17.09.2008**
(21) Anmeldenummer: 08102592.6
(22) Anmeldetag: 13.03.2008
(51) Int. Cl.: G08B 13/183

(54) **In Serie geschaltete optische Schaltleisten**

(30) Priorität: 14.03.2007 DE 102007012976
(71) Anmelder: Fraba AG, 51063 Köln (DE)
(72) Erfinder: Kagerer, Bernd, Lawrenceville, NJ 08648 (US); Schillo, Markus, 50670 Köln (DE)
(74) Vertreter: Cohausz & Florack

(57) **Zusammenfassung**

Die Erfindung betrifft eine Vorrichtung (1) zur Überwachung von Maschinenbewegungen, beweglichen Teilen von Maschinen, Toren, Türen und dergleichen umfassend mindestens einen ersten und einen zweiten optischen Überwachungssensor (2, 3, 4) zur Überwachung einer ersten und einer zweiten nichtkabelgebundenen Signalstrecke (SE), welche jeweils mindestens einen Sender (6, 7, 9) zum Senden von optischen Überwachungssignalen sowie einen Empfänger (5, 8, 10) zum Empfangen von optischen Überwachungssignalen aufweisen, wobei durch die Empfänger (5, 8) der Überwachungssensoren ein Empfangsbestätigungssignal beim Empfang eines Überwachungssignals erzeugbar ist. Die Aufgabe, eine gattungsgemäße Vorrichtung zur Verfügung zu stellen, welche den Verkabelungsaufwand deutlich verringert und damit weitere Anwendungsmöglichkeiten von optischen Überwachungssensoren ermöglicht wird dadurch gelöst, dass Mittel (12) zum Weiterleiten des Empfangsbestätigungssignals des Empfängers (5) des ersten Überwachungssensors (2) an den Sender (7) des zweiten Überwachungssensors (13) vorgesehen sind, mit dem Sender (7) des zweiten Überwachungssensors (3) abhängig vom Empfangsbestätigungssignal des Empfängers (5) des ersten Überwachungssensors (2) ein Überwachungssignal über die zweite nichtkabelgebundene Signalstrecke (SE) übermittelbar ist und Mittel (14) zum Weiterleiten des Empfangsbestätigungssignals des Empfängers (8) des zweiten Überwachungssensors (3) an einen Sender (9) eines weiteren Überwachungssensors (14) oder an eine Auswerteinheit (13) vorgesehen sind.

## Beschreibung

Die Erfindung betrifft eine Vorrichtung zur Überwachung von Maschinenbewegungen, beweglichen Teilen von Maschinen, Toren, Türen und dergleichen umfassend mindestens einen ersten und einen zweiten optischen Überwachungssensor zur Überwachung einer ersten und einer zweiten nichtkabelgebundenen, optischen Signalstrecke, welche jeweils mindestens einen Sender zum Senden von optischen Überwachungssignalen sowie einen Empfänger zum Empfangen von optischen Überwachungssignalen aufweisen, wobei durch die Empfänger der Überwachungssensoren ein Empfangsbestätigungssignal beim Empfang eines Überwachungssignals erzeugbar ist. Darüber hinaus betrifft die Erfindung vorteilhafte Verwendungen der erfindungsgemäßen Vorrichtung.

Überwachungsvorrichtungen im Sinne der vorliegenden Erfindung werden häufig dort verwendet, wo ein Durchgang, eine Durchfahrt oder ein sonstiger sicherheitsrelevanter Bereich mit Überwachungsmitteln überwacht werden muss, um beispielsweise Gefahren durch bewegte Maschinenteile, automatisch bewegte Türen oder Tore zu vermeiden. Typische Anwendungsgebiete sind beispielsweise automatisch schließende bzw. motorgetriebene Industrietore. Aufgrund der Robustheit und der einfachen Handhabbarkeit werden häufig optische Überwachungssensoren in entsprechenden Vorrichtungen verwendet. Diese Überwachungssensoren weisen jeweils einen Sender und einen Empfänger auf, zwischen welchen ein optisches Signal übermittelt wird, so dass bei einer Unterbrechung der nichtkabelgebundenen Signalstrecke ein Steuerungssignal bzw. ein Auswertesignal erzeugt werden kann. Bei bestimmten Verwendungen der gattungsgemäßen Vorrichtung, beispielsweise bei Karusselltüren, bei welchen eine Mehrzahl an Überwachungssensoren eingesetzt werden müssen, besteht das Problem, dass optische Überwachungssensoren nur parallel geschaltet eingesetzt werden können. Dies bedeutet, dass für jeden optischen Überwachungssensor eine eigene Signalleitung zur Auswerteeinheit verlegt werden muss. Aufgrund des hohen Aufwandes zur Verkabelung der optischen Überwachungssensoren werden diese durch in Serie schaltbare, über eine Widerstandsänderung arbeitende Überwachungssensoren, insbesondere elektrische Schaltleisten, ersetzt.

Hiervon ausgehend liegt der vorliegenden Erfindung die Aufgabe zugrunde, eine gattungsgemäße Vorrichtung zur Verfügung zu stellen, welche den Verkabelungsaufwand deutlich verringert und damit weitere Anwendungsmöglichkeiten von optischen Überwachungssensoren ermöglicht. Darüber hinaus ist es eine Aufgabe der vorliegenden Erfindung vorteilhafte Verwendungen vorzuschlagen.

Gemäß einer ersten Lehre der vorliegenden Erfindung wird die oben hergeleitete Aufgabe für eine gattungsgemäße Vorrichtung dadurch gelöst, dass Mittel zum Weiterleiten des Empfangsbestätigungssignals des Empfängers des ersten Überwachungssensors an den Sender des zweiten Überwachungssensors vorgesehen sind, mit dem Sender des zweiten Überwachungssensors abhängig vom Empfangsbestätigungssignal des Empfängers des ersten Überwachungssensors ein Überwachungssignal über die zweite nichtkabelgebundene, optische Signalstrecke übermittelbar ist und Mittel zum Weiterleiten des Empfangsbestätigungssignals des Empfängers des zweiten Überwachungssensors an einen Sender eines weiteren Überwachungssensors oder an eine Auswerteinheit vorgesehen sind.

Es hat sich überraschenderweise gezeigt, dass die Empfangsbestätigungssignale des Empfängers des ersten Überwachungssensors zur Ansteuerung des Senders des zweiten Überwachungssensors geeignet sind und insofern die optischen Überwachungssensoren hinsichtlich des Signalweges der Überwachungssignale in Serie geschaltet werden können. Der Verkabelungsaufwand reduziert sich bei der erfindungsgemäßen Vorrichtung deutlich. Hierdurch wird der Einsatz von prinzipiell beliebig vielen, in Serie geschalteten optischen Überwachungssensoren möglich.

Gemäß einer ersten Ausgestaltung der erfindungsgemäßen Vorrichtung sind Mittel zum Weiterleiten der Empfangsbestätigungssignale des Empfängers des ersten Überwachungssensors an den Sender des ersten Überwachungssensors vorgesehen, wobei der Sender des ersten Überwachungssensors beim Vorliegen eines Empfangsbestätigungssignals ein Überwachungssignal an den Empfänger des ersten Überwachungssensors sendet. Ist die Dauer des Sendevorgangs der Empfangsbestätigungs- bzw. Überwachungssignale vorgegeben, kann durch diese Maßnahme auf einfache Weise ermöglicht werden, dass der erste Sender ein periodisches Signal aussendet, welches durch den Empfänger des ersten Überwachungssensors zur Ansteuerung des Senders des zweiten Überwachungssensors verwendet wird. Eine Störung kann durch das Ausbleiben des periodischen Signals sehr zuverlässig detektiert werden. Vorzugsweise erfolgt die Erzeugung periodischer Überwachungs- und/oder Empfangsbestätigungssignale der Überwachungssensoren dadurch, dass die Überwachungssensoren zur Erzeugung von Überwachungs- und/oder Empfangsbestätigungssignalen mindestens einen Schwingkreis mit einem Verzögerungsglied oder einen Frequenzgenerator, insbesondere einen Mikroprozessor aufweisen. Der Schwingkreis mit einem Verzögerungsglied stellt die einfachste Variante zur Erzeugung von periodischen Überwachungs- und/oder Empfangssignalen dar. Wohingegen über einen Frequenzgenerator die Frequenz des Signals und dessen Form variiert werden kann. Der Mikroprozessor ermöglicht durch dessen Programmierbarkeit nicht nur eine einfache Realisierung eines Frequenzgenerators, sondern ermöglicht zusätzlich die Berücksichtigung weitere Signale oder Bedingungen zur Erzeugung der Überwachungs- und/oder Empfangsbestätigungssignale.

Gemäß einer besonders einfachen Ausführungsform der erfindungsgemäßen Vorrichtung sind als Mittel zum Weiterleiten der Empfangsbestätigungssignale kabelgebundene Signalleitungen vorgesehen. Es ist aber auch denkbar, die Empfangsbestätigungssignale kabellos, beispielsweise per Funkübertragung, induktiv oder optisch an den nächsten Sender zu übermitteln. Hierdurch wird der Verkabelungsaufwand weiter reduziert.

Bevorzugt ist der erste und/oder jeder weitere Überwachungssensor als optische Schaltleiste ausgebildet. Bei einer optischen Schaltleiste sind der Sender und der Empfänger des Überwachungssensors in einem flexiblen Profil eingebettet, welches beispielsweise aus einem flexiblen Elastomer besteht. Damit sind der Sender und der Empfänger vor möglichen Beschädigungen geschützt. Darüber hinaus gewährleistet die optische Schaltleiste, dass aufgrund der Verwendung des zumeist geschlossenen, flexiblen Profils die nichtkabelgebundene, optische Signalstrecke der Überwachungssignale besser vor Fremdlichteinflüssen geschützt ist.

Weisen Sender und/oder Empfänger der Überwachungssensoren Mittel zur Veränderung des Tastverhältnisses der Überwachungs- und/oder der Empfangsbestätigungssignale auf, kann die erfindungsgemäße Vorrichtung hinsichtlich ihres Energieverbrauches optimiert werden. Beispielsweise beträgt die typische Frequenz der Überwachungssignale 200 Hz bis 2,5 kHz, wobei üblicherweise ein Rechtecksignal verwendet wird. Der Energieverbrauch der Vorrichtung wird maßgeblich bestimmt durch die Dauer und Anzahl der gesendeten Überwachungs- und Empfangsbestätigungssignale bzw. -impulse. Über eine Veränderung des Tastverhältnisses kann die Dauer des Sendevorganges und damit auch der Energieverbrauch minimiert werden. Das maximal mögliche Tastverhältnis wird dann erreicht, wenn das Überwachungssignal nicht mehr von einem Störungssignal, beispielsweise einer Störung durch elektrische Entladungen, unterschieden werden kann. Das Tastverhältnis kann beispielsweise in einem Bereich von 1:1 bis 1:20 eingestellt werden.

Um Fremdlichteinflüsse zu reduzieren bzw. auszuschließen, sind vorzugsweise Sender vorgesehen, welche die Überwachungssignale über eine Trägerfrequenz aussenden. Beispielsweise wird bei der Übertragung der Überwachungssignale auf der optischen, nichtkabelgebundenen Signalstrecke das Überwachungssignal mit einer Trägerfrequenz von 38 kHz moduliert.

Gemäß einer nächsten vorteilhaften Ausführungsform der vorliegenden Erfindung sind Empfänger vorgesehen, welche die Signalform der Überwachungssignale unverändert als Empfangsbestätigungssignale verwenden. Im Sinne der vorliegenden Erfindung bedeutet die unveränderte Verwendung der Signalform der Überwachungssignale, dass beispielsweise deren Form, beispielsweise eine Rechteckform, und/oder deren Frequenz für die Empfangsbestätigungssignale verwendet wird. Es schließt aber auch mit ein, dass beispielsweise die gleiche oder eine andere Trägerfrequenz oder ein anderes Tastverhältnis, d.h. Puls-Pause-Verhältnis, für das Empfangsbestätigungssignal verwendet wird.

Weisen die Überwachungssensoren flankengesteuerte Sender und/oder Empfänger auf, wird einerseits eine zuverlässige Signalerkennung durch Sender und Empfänger erreicht. Andererseits kann die Dauer des Sendevorgangs des Überwachungs- bzw. Empfangsbestätigungssignals mit Beginn der Flanke des Signals eingestellt werden.

Alternativ oder kumulativ zur ersten Ausgestaltung können von dem ersten Überwachungssensor unabhängige Mittel vorgesehen sein, welche zumindest den Sender des ersten Überwachungssensors zur Aussendung eines nicht kabelgebundenen Überwachungssignals an den Empfänger des ersten Überwachungssensors veranlassen. Beispielsweise kann ein digitaler oder analoger Oszillator vorgesehen sein, welcher den Sender des ersten Überwachungssensors zur Aussendung des nicht kabelgebundenen Überwachungssignals veranlasst. Einerseits können in diesem Fall alle Überwachungssensoren hinsichtlich der Sender identisch ausgeführt werden. Andererseits ergibt sich durch verstimmbare Oszillatoren die Möglichkeit, das nicht kabelgebundene Überwachungssignal an die Anwendung, beispielsweise eine weitere Steuerung, anzupassen.

Gemäß einer zweiten Lehre der vorliegenden Erfindung wird die oben aufgezeigte Aufgabe durch die Verwendung der erfindungsgemäßen Vorrichtung zur Bewegungsüberwachung von beweglichen Teilen, insbesondere Maschinenenteilen, Schiebetoren, Türen und Karusselltüren gelöst. Bezüglich der Vorteile der erfindungsgemäßen Verwendung wird auf die Vorteile der erfindungsgemäßen Vorrichtung verwiesen.

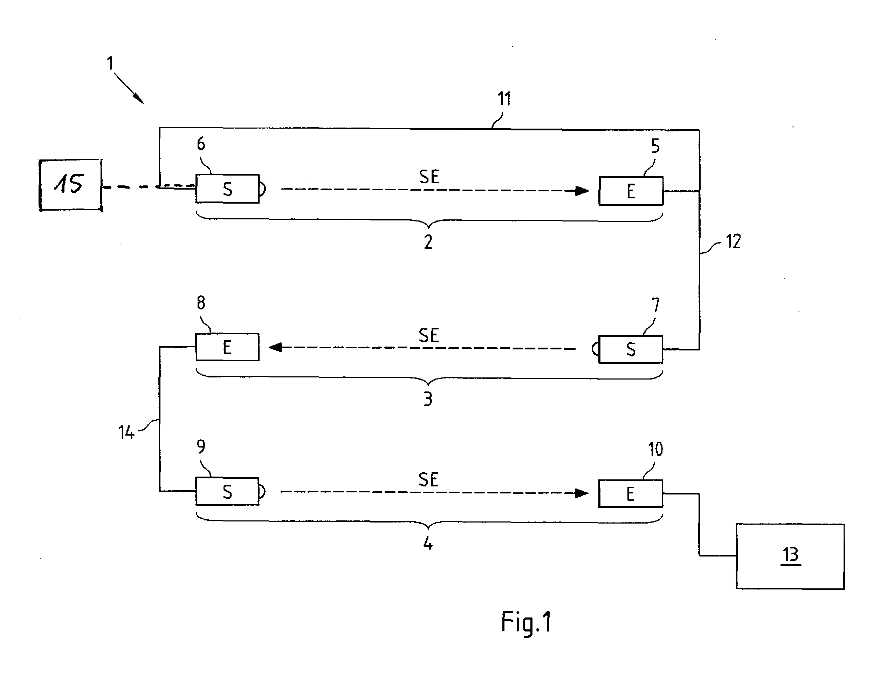

Es gibt nun eine Vielzahl von Möglichkeiten die erfindungsgemäße Vorrichtung auszugestalten und weiterzubilden. Hierzu wird verwiesen einerseits auf die dem Patentanspruch 1 nachgeordneten Patentansprüche, andererseits auf die Beschreibung eines Ausführungsbeispiels in Verbindung mit der Zeichnung.

Die Zeichnung zeigt eine schematische Darstellung eines Ausführungsbeispiels der erfindungsgemäßen Vorrichtung 1 zur Überwachung von Maschinenbewegungen, beweglichen Teilen von Maschinen, Toren, Türen und dergleichen. Die Vorrichtung 1 weist insgesamt drei Überwachungssensoren 2, 3, 4 auf, welche jeweils einen Sender S und einen Empfänger E umfassen. Nicht dargestellt in der Zeichnung sind die in den Senden S und den Empfängern E vorgesehenen Signalerzeugungsmittel, mit welchen die Überwachungs- und/oder Empfangsbestätigungssignale erzeugt werden. Zwischen den Sendern S und den Empfängern E befindet sich die nichtkabelgebundene, optische Signalstrecke SE, über welche optische Überwachungssignale vom Sender S an den Empfänger E übermittelt werden. Eine Unterbrechung dieser optischen, nichtkabelgebundenen Signalstrecke, beispielsweise durch ein in der Bewegungsrichtung eines Tores auftretendes Hindernis, wird durch das Ausführungsbeispiel der erfindungsgemäßen Vorrichtung überwacht.

Empfängt der Empfänger 5 des ersten Überwachungssensors 2 ein Überwachungssignal des Senders 6, so erzeugt dieser auf der Signalleitung 11 und 12 ein Empfangsbestätigungssignal, welches dem Sender 6 des ersten Überwachungssensors 2 und dem Sender 7 des zweiten Überwachungssensors 3 übermittelt wird. Beide Sender 6, 7 erzeugen nun solange das Empfangsbestätigungssignal des ersten Empfängers 5 anliegt ihrerseits ein Überwachungssignal, welches über die nichtkabelgebundene, optische Signalstrecke SE sowohl an den Empfänger des ersten Überwachungssensors 2 als auch des zweiten Überwachungssensors 3 gesandt wird.

Alternativ oder kumulativ kann beispielsweise ein Oszillator 15 in digitaler oder analoger Ausführung vorgesehen sein, welcher den Sender 6 des ersten Überwachungssensors 2 veranlasst, ein Überwachungssignal über die nichtkabelgebundene Signalstrecke SE zu senden. Der Oszillator 15 triggert somit den ersten Sender der Serienschaltung von Überwachungssensoren. Die Signalleitung 11 zur Übermittlung des Empfangsbestätigungssignals kann entfallen, sofern der Oszillator 15 dauerhaft den ersten Überwachungssensor 1 triggert. Vorstellbar ist auch, dass gleichzeitig mehrere Überwachungssensoren und die zugehörigen Serienschaltungen durch einen Oszillator 15 getriggert werden. Darüber hinaus kann durch eine Änderung der Frequenz des Oszillators 15 das Ausgangssignal der Überwachungssensoren beispielsweise an eine spezifische Anwendung eingestellt werden.

Hierdurch werden periodische Überwachungs- und Empfangsbestätigungssignale erzeugt. Vorzugsweise beträgt die Frequenz der Überwachungs- und/oder Empfangsbestätigungssignale 200 Hz bis 2,5 kHz. Auf der nichtkabelgebundenen Signalstrecke SE wird im vorliegenden Ausführungsbeispiel das Überwachungssignal mit einer Trägerfrequenz moduliert. Die Trägerfrequenz des Überwachungssignals auf der nichtkabelgebundenen Signalstrecke beträgt üblicherweise 38kHz. Es können aber auch andere Trägerfrequenzen verwendet werden. Durch die Modulation mit einer Trägerfrequenz können Einflüsse von Fremdlicht wirkungsvoll unterdrückt werden.

Der Empfänger 8 des zweiten Überwachungssensors 3 ist seinerseits mit dem Sender 9 des dritten Überwachungssensors 4 über eine beispielsweise kabelgebundene Signalleitung 14 verbunden, so dass bei Erzeugung eines Empfangsbestätigungssignals durch den Empfänger 8 des zweiten Überwachungssensors 3 der Sender 9 des dritten Überwachungssensors 4 seinerseits ein Überwachungssignal an den Empfänger 10 des dritten Überwachungssensors 4 sendet.

Im soeben beschriebenen Ausführungsbeispiel sind beispielhaft drei Überwachungssensoren 2,3,4, welche üblicherweise als optische Schaltleisten ausgebildet sind, in Serie geschaltet. Die Kette an Überwachungssensoren bzw. optischer Schaltleisten kann aber durch die erfindungsgemäße Vorrichtung beliebig fortgesetzt werden, ohne dass eine Vielzahl an Signalleitungen, wie es bei einer Parallelschaltung der Überwachungssensoren notwendig wäre, verwendet werden müssen.

Der Empfänger 10 des dritten Überwachungssensors 4 ist mit einer Auswerteeinheit 13 verbunden. Diese Auswerteinheit 13 kann beispielsweise ein Teil einer Steuereinheit sein, kann aber auch beispielsweise zur Weitergabe eines Steuersignals an eine Steuereinheit eine Signalauswertung vornehmen.

An der schematischen Darstellung des Ausführungsbeispiels der erfindungsgemäßen Vorrichtung kann leicht gesehen werden, dass eine Unterbrechung der optischen, nichtkabelgebundenen Signalstrecken SE oder im Störungsfalle auch der kabelgebundenen Signalleitungen für die Empfangsbestätigungssignale dazu führt, dass Empfangsbestätigungssignale nicht an den nächsten Sender 6, 7, 9 bzw. die Auswerteeinheit 13 durch den zugehörigen Empfänger 5, 8 10 weitergeleitet werden. Dies führt dazu, dass an der Auswerteeinheit 13 kein periodisches Signal mehr anliegt. Eine Störung kann insofern schnell und zuverlässig festgestellt bzw. angezeigt werden.

## Patentansprüche

1. Vorrichtung (1) zur Überwachung von Maschinenbewegungen, beweglichen Teilen von Maschinen, Toren, Türen und dergleichen umfassend mindestens einen ersten und einen zweiten optischen Überwachungssensor (2, 3, 4) zur Überwachung einer ersten und einer zweiten nichtkabelgebundenen, optischen Signalstrecke (SE), welche jeweils mindestens einen Sender (6, 7, 9) zum Senden von optischen Überwachungssignalen sowie einen Empfänger (5, 8, 10) zum Empfangen von optischen Überwachungssignalen aufweisen, wobei durch die Empfänger (5, 8) der Überwachungssensoren ein Empfangsbestätigungssignal beim Empfang eines Überwachungssignals erzeugbar ist,
**dadurch gekennzeichnet, dass**
Mittel (12) zum Weiterleiten des Empfangsbestätigungssignals des Empfängers (5) des ersten Überwachungssensors (2) an den Sender (7) des zweiten Überwachungssensors (3) vorgesehen sind, mit dem Sender (7) des zweiten Überwachungssensors (3) abhängig vom Empfangsbestätigungssignal des Empfängers (5) des ersten Überwachungssensors (2) ein Überwachungssignal über die zweite nichtkabelgebundene, optische Signalstrecke (SE) übermittelbar ist und Mittel (14) zum Weiterleiten des Empfangsbestätigungssignals des Empfängers (8) des zweiten Überwachungssensors (3) an einen Sender (9) eines weiteren Überwachungssensors (14) oder an eine Auswerteinheit (13) vorgesehen sind.

2. Vorrichtung nach Anspruch 1,
**dadurch gekennzeichnet, dass**
Mittel (11) zum Weiterleiten der Empfangsbestätigungssignale des Empfängers (5) des ersten Überwachungssensors (2) an den Sender (6) des ersten Überwachungssensors (2) vorgesehen sind, wobei der Sender (6) beim Vorliegen eines Empfangsbestätigungssignals ein Überwachungssignal an den Empfänger (5) des ersten Überwachungssensors (2) sendet.

3. Vorrichtung nach Anspruch 1 oder 2,
**dadurch gekennzeichnet, dass**
die Überwachungssensoren (2, 3, 4) zur Erzeugung der Überwachungs- und/oder Empfangsbestätigungssignale mindestens einen Schwingkreis optional mit einem Verzögerungsglied oder einen Frequenzgenerator, insbesondere einen Mikroprozessor aufweisen.

4. Vorrichtung nach einem der Ansprüche 1 bis 3,
**dadurch gekennzeichnet, dass**
als Mittel (11, 12, 14) zum Weiterleiten der Empfangsbestätigungssignale der Empfänger der Überwachungssensoren kabelgebundene Signalleitungen vorgesehen sind.

5. Vorrichtung nach einem der Ansprüche 1 bis 4,
**dadurch gekennzeichnet, dass**
der erste und/oder jeder weitere Überwachungssensor (2, 3, 4) als optische Schaltleiste ausgebildet ist.

6. Vorrichtung nach einem der Ansprüche 1 bis 5,
**dadurch gekennzeichnet, dass**
die Sender (6, 7, 9) und/oder Empfänger (5, 8, 10) der Überwachungssensoren (2, 3, 4) Mittel zur Veränderung des Tastverhältnisses der Überwachungs- und/oder der Empfangsbestätigungssignale aufweisen.

7. Vorrichtung nach einem der Ansprüche 1 bis 6,
**dadurch gekennzeichnet, dass**
Sender (6, 7, 9) vorgesehen sind, welche die Überwachungssignale über eine Trägerfrequenz aussenden.

8. Vorrichtung nach einem der Ansprüche 1 bis 7,
**dadurch gekennzeichnet, dass**
Empfänger (5, 8, 10) vorgesehen sind, welche die Signalform der Überwachungssignale unverändert als Empfangsbestätigungssignale verwenden.

9. Vorrichtung nach einem der Ansprüche 1 bis 8,
**dadurch gekennzeichnet, dass**
die Überwachungssensoren flankengesteuerte Sender (6, 7, 9) und/oder Empfänger (5, 8, 10) aufweisen.

10. Vorrichtung nach einem der Ansprüche 1 bis 9,
**dadurch gekennzeichnet, dass**
von dem ersten Überwachungssensor unabhängige Mittel vorgesehen sind, welche zumindest den Sender (6) des ersten Überwachungssensors (2) zur Aussendung eines nicht kabelgebundenen Überwachungssignals an den Empfänger des ersten Überwachungssensors (2) veranlassen.

11. Verwendung einer Vorrichtung (1) nach einem der Ansprüche 1 bis 10 zur Bewegungsüberwachung von beweglichen Teilen, insbesondere Maschinenenteilen, Toren, Schiebetoren, Türen und Karusselltüren.
